# EUROPEAN PATENT SPECIFICATION

(11) **EP 2 377 754 B1**
(45) Date of publication and mention of the grant of the patent: **07.05.2014**
(21) Application number: 11162576.0
(22) Date of filing: 15.04.2011
(51) Int. Cl.: B29C 70/30, B63B 5/24

(54) **Method and mould for making a part of a vessel**
Verfahren und Form zur Herstellung eines Teils eines Wasserfahrzeuges
Procédé et moule pour fabriquer une partie d'un bateau

(30) Priority: 19.04.2010 NL 1037897
(43) Date of publication of application: 19.10.2011
(73) Proprietor: Bolidt Maatschappij tot Exploitatie van Kunststoffen en Bouwwerken B.V., 3341 LJ Hendrik-Ido-Ambacht (NL)
(72) Inventor: Bol, Rientz Willem, 3342 LB, HENDRIK-IDO-AMBACHT (NL)
(74) Representative: Louwaard, Jan-Willem Paul

(56) References cited:
- US-A- 4 021 874
- US-A- 5 036 789

## Description

The present invention relates to a method for manufacturing a part of a vessel.

In the manufacture of vessels, such as sailing boats, motorboats, speedboats, sloops etc., it is known to separately form parts, including a hull and a superstructure, from a plastic composite such as glass fibre-reinforced polyester and to combine the thus formed parts into one whole. The hull and the superstructure are for instance both manufactured here in a separate mould, which has a surface which forms a reverse form of the hull or superstructure to be produced. The hull and the superstructure are then formed by arranging layers of the plastic composite on this surface of the mould, for instance by arranging glass fibre mats on this surface and saturating them with a polyester resin using an application roller. Before the plastic composite is arranged a synthetic resin is generally applied, for instance sprayed, onto the surface of the mould, and the layers of plastic composite are arranged on this synthetic resin. The layer of synthetic resin is referred to as the gel coat. The gel coat forms the surface of the hull and the superstructure which is visible from the outside after the hull and the superstructure have been joined together. The gel coat for instance avoids the glass fibres in glass fibre-reinforced polyester as plastic composite being visible from the outside.

After curing of the plastic composite and the gel coat the thus formed hull and superstructure are removed from the respective moulds and joined together to form a whole. Covering elements, for instance anti-slip elements, are then arranged on the parts of the surface of the superstructure which are walked on during use of the vessel, the elements covering this surface and for instance avoiding that the users of the vessel slip when walking over the surface of the superstructure. This latter is important since the gel coat forms a slippery surface, particularly when the surface is wet. The covering elements also serve for instance to protect the surface of the superstructure from damage. Known covering elements for the superstructure are for instance teak wood planks and rough PVC (Polyvinyl chloride) sheets. It is also known to arrange covering elements, such as plastic or rubber strips, on the outer surface of the hull to protect this surface for instance against impacts.

It is known that the covering elements are arranged on the surface of the hull and/or the superstructure, for instance by means of adhesive, after the hull and the superstructure have been joined together during finishing of the vessel. The surfaces on which the covering elements must be arranged must first be made wholly free of grease and dust here, after which the covering elements are adhered to the surfaces. The adhesive must then cure for some time. While the surfaces are being made free of grease and dust and while the adhesive cures no further finishing operations can be performed on the hull and/or the superstructure. The arranging of the covering elements therefore considerably disrupts other finishing operations.

In document US 4,021,874, which is regarded as the closest prior art, a method is described for forming the deck of a boat hull. In the described method, after removing a moulded plastic sheet from a mould, non-skid panels are adhered to the moulded plastic sheet by means of an adhesive. After adhering the non-skid panels, the moulded plastic sheet with the non-skid panels adhered thereto is arranged in a nest for arranging a foam on the lower surface of the moulded plastic sheet and for embedding the non-skid panels in the upper surface thereof.

The present invention has for its object, among others, to reduce the disruption of the finishing operations resulting from arrangement of the covering elements.

The invention provides for this purpose a method for manufacturing a part of a vessel, comprising of
- arranging a plastic composite in a number of layers in a mould with a surface forming a reverse form of the part of the vessel to be manufactured, whereby
- arranging covering elements in the mould before the step of arranging the layers of the plastic composite so that the layers of the plastic composite are connected to the covering elements.

The method according to the invention makes it possible for the superstructure to be already provided with the covering elements when it is removed from the mould. The disruption to the finishing operations resulting from arranging of the covering elements after the superstructure and the hull have been joined together is hereby avoided. Furthermore, the method according to the invention for instance makes it possible that no separate adhesion of the covering elements to the superstructure is necessary. This is because the covering elements are connected to the superstructure by means of the synthetic resin of the gel coat and/or the synthetic resin of the plastic composite. This has the advantage in the first place that the overall completion time for the manufacture of the vessel can be reduced, since additional time is no longer necessary to allow curing of the adhesive. Because the covering elements are not adhered separately, there is moreover a smaller chance of imperfections associated with separate adhesion, such as inclusion of air. Inclusion of air is a problem because volume changes in the included air resulting from temperature fluctuations may result in release of the adhesive connection. Because the gel coat and/or the plastic composite are applied uniformly in thin layers to the surface of the covering elements in the method according to the invention, inclusion of air is avoided. The method according to the invention also makes it possible for the manufactured parts of the vessel, and thereby the vessel as a whole, to be lighter. This is possible in the first place as a result of the absence of a separate adhesive layer. In addition, the manufactured parts can be lighter because the method makes it possible for the covering elements to be less stiff and form-retaining. In the known method the covering elements must be so form-retaining and stiff that no deformations occur when during arrangement a part of the covering element is already in contact with the adhesive on the superstructure and a part not yet so. Sufficient form-retention and stiffness then prevent the person arranging the covering element exerting such a force on the part not yet in contact with adhesive that this part is adhered in deformed manner. Because in the method according to the invention the covering elements are first arranged in the mould, deformations during connection of the covering elements to the plastic composite are avoided. The stiffness and form-retention of the covering elements can hereby be smaller. This makes it possible to use less material to form the covering elements, which can therefore be lighter in weight.

In a favourable embodiment of the method according to the invention the part of the vessel to be manufactured is either a hull or a superstructure. The method is particularly favourable for manufacturing the hull and the superstructure since, after being joined together, these two parts form the starting point for the finishing operations, and arranging the covering elements on these parts according to the known methods by definition disrupts other finishing operations.

In a favourable embodiment of the method according to the invention recesses are arranged in the surface of the mould for the purpose of arranging the covering elements therein, wherein the recesses preferably take the form of the covering elements to be arranged. These recesses make it possible to simplify positioning of the covering elements in the plane of the surface of the mould. This has the advantage that the time required to position the covering elements can be reduced.

A further favourable embodiment of the method according to the invention comprises the step of applying a gel coat to at least a part of the surface of the mould that is free of the covering elements and to at least a part of the surface of the covering elements remote from the mould, this before the step of arranging the plastic composite and after the step of arranging the covering elements in the mould. This measure enables a particularly good connection of the gel coat to the covering elements. In addition to the advantage of a visually attractive result, this has the advantage that, when the plastic composite is being arranged, the synthetic resin which is used here, and which has a relatively low viscosity when arranged, moves between the surface of the mould and the surface of the covering elements facing toward the surface of the mould. In a favourable embodiment hereof the part of the surface of the covering elements arranged in the mould which is remote from the mould and to which the gel coat is applied is the edge part. This measure enables a direct connection between the plastic composite and the surface of the covering elements, while retaining the above described advantage of applying the gel coat to a part of the surface of the covering elements. The direct connection between the plastic composite and the surface of the covering elements has the advantage that there can be a better connection.

A further favourable embodiment of the method according to the invention also comprises the step, after the covering elements have been arranged in the mould, of generating an underpressure between the surface of the covering elements facing toward the mould and the surface of the mould facing toward the covering elements. This additional step simplifies the positioning of the control elements in the mould. Applying the underpressure for instance prevents shifting of the covering elements. This step is particularly favourable when the covering elements are arranged on a curved surface. Such curved surfaces are common on superstructures, for instance to make it easier for water to flow off the superstructure. In the case of covering elements having a stiffness such that they do not of themselves follow the curvature of the surface of the mould on which they are arranged, this step of generating an underpressure makes it possible to push the covering elements against the curved surface and suction them fixedly so that the control element continues to follow the curve. In a favourable embodiment of this step the part of the surface of the mould on which the covering elements are arranged comprises openings through which air can be suctioned in order to generate the underpressure. Such a mould enables simple generation of the underpressure. In combination with the above described recesses in the surface of the mould, an exceptionally good and simple positioning of the covering elements in the mould is possible.

In a further favourable embodiment of the method according to the invention the plastic composite arranged in a number of layers is a fibre-reinforced plastic composite, preferably glass fibre-reinforced polyester.

In a further favourable embodiment of the method according to the invention the covering elements are anti-slip elements.

In a further favourable embodiment of the method according to the invention the covering elements are formed from a plastic composite. This measure enables a very good connection between the covering elements and the plastic composite from which the part of the vessel is formed. Particularly favourable covering elements of plastic composite are commercially available under the brand name Esthec^{®}. Alternatively, the covering elements can for instance be of wood, wherein the surface of the wood remote from the surface of the mould can for instance be provided with a layer of material which adheres well to the plastic composite that is used and from which the part of the vessel is formed. It is also possible for the covering elements of plastic composite to be provided with a layer of material which improves the adhesion to the plastic composite used to form the part of the vessel.

In a further favourable embodiment the covering elements are sheet-like. This measure makes it easy to arrange the covering elements. The surface of the covering element facing toward the surface of the mould can be provided with a decoration, for instance in the form of grooves which for instance suggest a traditional assembly of planks, or any other desired pattern. The covering elements can themselves also be in plank form.

The present invention also relates to a mould for manufacturing a part of a vessel, preferably either the superstructure or the hull, comprising a surface which forms a reverse form of the part of the vessel to be manufactured, wherein the surface of the mould comprises a positioning construction for positioning covering elements in the mould. Such a mould enables an easy positioning of the covering elements when applying the method according to the invention as described above.

In a favourable embodiment of the mould according to the invention the positioning construction comprises recesses for arranging covering elements therein, wherein the recesses preferably take the form of the covering elements to be arranged. This measure enables an easy positioning of the covering elements in the plane of the surface of the mould.

In an alternative or additional embodiment the positioning construction comprises openings through which air can be suctioned in order to generate an underpressure between the surface of the covering elements facing toward the mould and the surface of the mould facing toward the covering elements. This measure enables an easy positioning of the covering elements on a curved surface of the mould.

The present invention also relates to a part of a vessel, preferably either a hull or a superstructure, manufactured in accordance with the method according to the invention as described above, and to a vessel comprising a number of parts, preferably either a hull or a superstructure, manufactured in accordance with the method according to the invention as described above. Such parts of a vessel and such a vessel have for instance the advantage, relative to the parts of a vessel and vessels wherein the covering elements are adhered to parts such as the hull and the superstructure, that they can be of lighter weight, among other reasons due to the absence of the adhesive layer.

The present invention will be further elucidated hereinbelow on the basis of exemplary embodiments shown in the accompanying drawing. These are non-limitative exemplary embodiments. The same or similar parts, components and elements are designated in the figures with the same reference numerals. In the drawing:
- fig. 1 is a perspective view of a hull and a superstructure of a vessel;
- fig. 2 is a cross-sectional view of a mould for manufacturing a superstructure, with a manufactured superstructure therein;
- fig. 3 shows a schematic representation of the method according to the invention;
- fig. 4 is a cross-sectional view of a superstructure manufactured according to a method as shown in figure 3;
- fig. 5A and 5B show a schematic representation of an alternative embodiment of the method as shown in figure 3 and a cross-sectional view of a mould according to the invention;
- fig. 6 is a cross-sectional view of a superstructure manufactured according to the method as shown in figures 5A and 5B;
- fig. 7A and 7B show a schematic representation of two alternative embodiments of the method according to the invention and a cross-sectional view of a part of the mould in two alternative embodiments according to the invention.

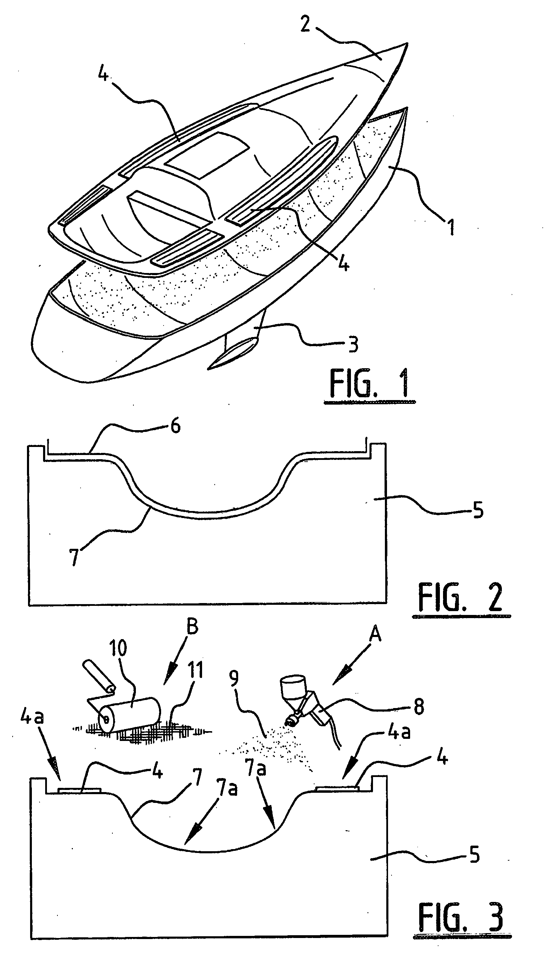

Figure 1 shows a hull 1 and a superstructure 2 as parts of a vessel. After being joined together, hull 1 and superstructure 2 form the basis of the vessel, also referred to as the body. In the shown the case the vessel is a sailing boat with keel 3. The vessel could also be of a different type, for instance motorboat, speedboat, sloop, etc. Shown is that covering elements 4 are arranged on superstructure 2. These covering elements 4 are for instance sheet-like, wherein grooves are milled into the surface visible during use, creating the suggestion that the sheets consist of individual planks. Other patterns are however also possible.

Figure 2 shows a cross-section of a mould 5, using which a superstructure 6 is formed in known manner. Shown is that the mould has a surface 7 which has a reverse form of the manufactured superstructure 6. According to a known method for manufacturing a vessel, superstructure 6 is removed from mould 5 and then placed on a hull 1 and connected thereto. Covering elements 4 are then adhered to superstructure 6 after the surfaces of superstructure 6 on which covering elements 4 must be arranged have been made free of dust and grease. Hull 1 of figure 1 can be formed in the same manner.

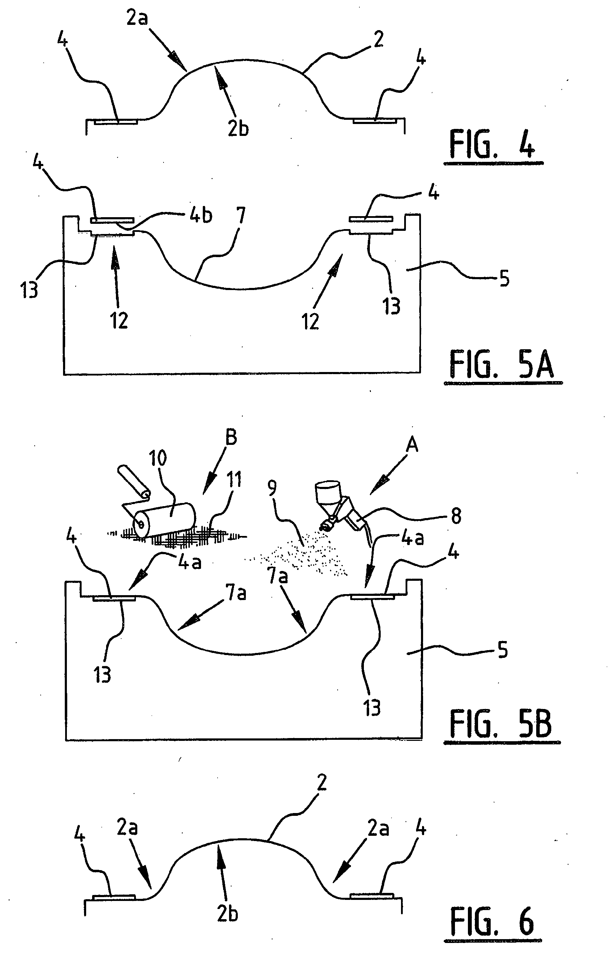

Figure 3 shows schematically the method according to the invention for manufacturing a superstructure 2 as part of a vessel as shown in figure 1, wherein superstructure 2 is already provided with covering elements 4 before superstructure 2 is fixed to hull 1. Figure 3 shows that covering elements 4 are arranged on surface 7 of mould 5 with their decorative surface facing toward surface 7 of mould 5. Indicated schematically by means of image A of a spraying device 8 is that, after covering elements 4 have been arranged in mould 5, a gel coat 9 in the form of a synthetic resin is applied to at least a part of surface 7a of the mould which is free of covering elements 4 and to at least a part of the surface 4a of covering elements 4 remote from mould 5. Indicated schematically by means of image B of an application roller 10 and the fibre mat shown as glass fibre mat 11 is that, after covering elements 4 have been arranged and after gel coat 9 has been applied, a plastic composite in the form of for instance fibre mats 11, such as glass fibre mats, which are saturated in a synthetic resin such as polyester which has not yet cured, is arranged in mould 5 so that superstructure 2 is formed layer by layer on gel coat 9 and on covering elements 4. The layers of the plastic composite are thus connected to covering elements 4, optionally via the applied layer of gel coat 9. After curing of the gel coat and the plastic composite, superstructure 2 is removed from the mould. Figure 4 shows a cross-sectional view of the resulting superstructure 2. Because the covering elements were arranged in the mould on surface 7 of mould 5 as shown in figure 3, covering elements 4 are recessed into the upper-lying surface 2a of superstructure 2. Because the gel coat was applied before the plastic composite was arranged, the gel coat is visible on the upper-lying surface 2a of superstructure 2 and the glass fibre mats embedded in polyester are visible on the underlying surface 2b.

Figures 5A and 5B show an alternative embodiment of the method as shown in figure 3. Figure 5A shows that covering elements 4 are directed with their decorative surfaces 4b toward surface 7 of mould 5. In the surface of mould 5 a positioning construction 12 is formed by recesses 13 in which covering elements 4 can be arranged. As shown, these recesses 13 have the form of the cross-section of covering elements 4 to be arranged, so that covering elements 4 are easy to position in recesses 13. In the plane perpendicularly of the plane shown in the figure the recesses 13 can also have the same peripheral form as the form of covering elements 4 in that plane. Figure 5B shows that covering elements 4 are arranged in recesses 13.

Indicated schematically by means of image A of a spraying device 8 is that, after covering elements 4 have been arranged in mould 5, a gel coat 9 in the form of a synthetic resin is applied to at least a part of surface 7a of the mould which is free of covering elements 4 and to at least a part of surface 4a of covering elements 4 remote from mould 5. Indicated schematically by means of image B of an application roller 10 and the fibre mat shown as glass fibre mat 11 is that, after covering elements 4 have been arranged and after gel coat 9 has been applied, a plastic composite in the form of for instance fibre mats 11, such as glass fibre mats, which are saturated in a synthetic resin such as polyester which has not yet cured, is arranged in mould 5 so that superstructure 2 is formed layer by layer on gel coat 9 and on covering elements 4. The layers of the plastic composite are then connected to covering elements 4, optionally via the applied layer of gel coat 9. After curing of the gel coat and the plastic composite, superstructure 2 is removed from the mould. Figure 6 shows a cross-section of the resulting superstructure 2. Because covering elements 4 were arranged in the mould in recesses 13 in surface 7 of mould 5 as shown in figures 5A and 5B, covering elements 4 are situated on the upper-lying surface 2a of superstructure 2. Because the gel coat was applied before the plastic composite was arranged, the gel coat is visible on upper-lying surface 2a of superstructure 2 and the glass fibre mats embedded in polyester are visible on the underlying surface 2b. If recesses 13 were less deep, the result would be that covering elements are partially recessed into surface 2a of superstructure 2.

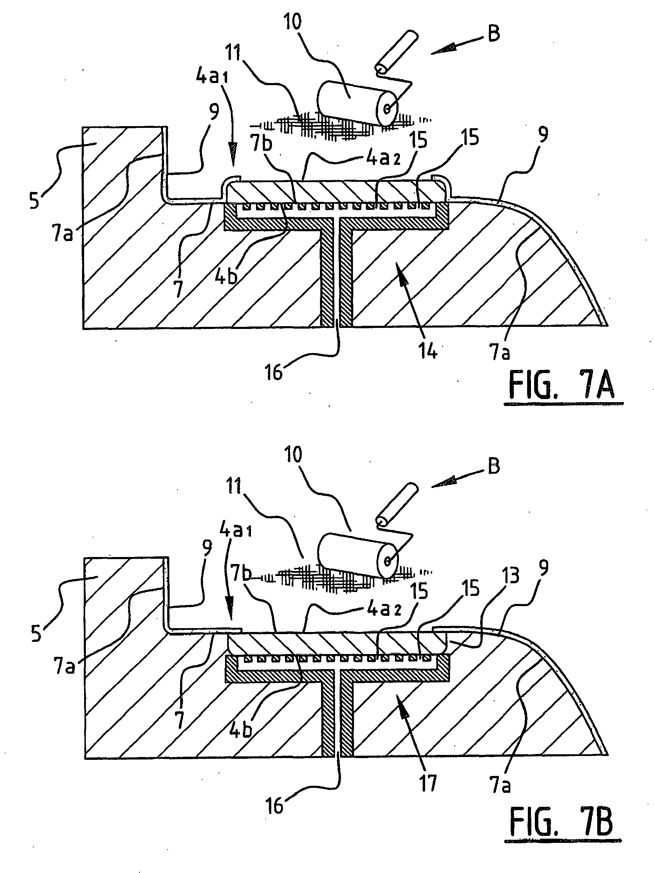

Figures 7A and 7B show schematically two embodiments of the method according to the invention and a cross-sectional view of a part of the mould in two alternative embodiments, this part lying close to a covering element 4 arranged in mould 5.

Figure 7A shows that in surface 7 of mould 5 is arranged a positioning construction 14 in the form of openings 15 through which air can be extracted via suction channel 16 in order to generate an underpressure between surface 4b of covering element 4 facing toward mould 5 and surface 7b of mould 5 facing toward covering element 4. As shown, covering element 4 is arranged on this surface 7b with openings 15, after which a gel coat 9 in the form of a synthetic resin is applied to the part of surface 7a of the mould which is free of covering element 4 and edge part 4a₁ of the surface 4a of covering elements 4 remote from mould 5. Gel coat 9 is for instance applied by means of a spraying process, as shown schematically in figure 3. Gel coat 9 seals edge part 4a₁ in airtight manner. By suctioning away air via openings 15 and suction channel 16 an underpressure is generated between surface 4b of covering element 4 facing toward the mould and surface 7b of the mould facing toward covering element 4, whereby covering element 4 is suctioned against surface 7b of mould 5 facing toward covering element 4. As a result the covering element 4 takes on the form of surface 7b of mould 5 facing toward covering element 4 and the covering element is prevented from shifting. In the shown exemplary embodiment the surface 7b of mould 5 facing toward covering element 4 is flat. This surface can also be curved so that covering element 4 is forced into the curvature of surface 7b. Indicated schematically by means of image B of an application roller 10 and fibre mat 11 is that, after covering elements 4 have been arranged and after gel coat 9 has been applied, a plastic composite in the form of for instance fibre mats 11, such as glass fibre mats, which are saturated in a synthetic resin such as polyester which has not yet cured, is arranged in mould 5 so that superstructure 2 is formed layer by layer on gel coat 9 and on the surface 4a₂ of covering elements 4 not covered with gel coat. In the resulting superstructure 2 the plastic composite in the form of fibre mats 11 saturated in synthetic resin will be connected via gel coat 9 to covering element 4 at the position of surface 4a₁ of covering element 4, while the plastic composite in the form of fibre mats 11 saturated in synthetic resin are connected directly to covering element 4 at the position of surface 4a₂ of covering element 4.

Figure 7B shows that in surface 7 of mould 5 is arranged a positioning construction 17 in the form of openings 15 through which air can be extracted via suction channel 16 in order to generate an underpressure between surface 4b of covering element 4 facing toward mould 5 and surface 7b of mould 5 facing toward covering element 4. Positioning construction 17 also comprises the recess 13 of figures 5A and 5B. As shown, covering element 4 is arranged on surface 7b with openings 15 and in recess 13, after which a gel coat 9 in the form of a synthetic resin is applied to the part of surface 7a of the mould which is free of covering element 4 and edge part 4a₁ of surface 4a of covering elements 4 remote from mould 5. Gel coat 9 is for instance applied by means of a spraying process, as shown schematically in figure 3. Gel coat 9 seals edge part 4a₁ in airtight manner. By then suctioning away air via openings 15 and suction channel 16 an underpressure is generated between surface 4b of covering element 4 facing toward the mould and surface 7b of the mould facing toward covering element 4, whereby covering element 4 is suctioned against surface 7b of mould 5 facing toward covering element 4. As a result the covering element 4 takes on the form of surface 7b of mould 5 facing toward covering element 4 and the covering element is prevented from shifting. In the shown exemplary embodiment surface 7b of mould 5 facing toward covering element 4 is flat. This surface can also be curved so that covering element 4 is forced into the curvature of surface 7b. Indicated schematically by means of image B of an application roller 10 and fibre mat 11 is that, after covering elements 4 have arranged and after gel coat 9 has been applied, a plastic composite in the form of for instance fibre mats 11 which are saturated in a synthetic resin which has not yet cured, is arranged in mould 5 so that superstructure 2 is formed layer by layer on gel coat 9 and on the surface 4a₂ of covering elements 4 not covered with gel coat. In the resulting superstructure 2 the plastic composite in the form of fibre mats 11 saturated in a synthetic resin will be connected via gel coat 9 to covering element 4 at the position of surface 4a₁ of covering element 4, while the plastic composite in the form of fibre mats 11 saturated in a synthetic resin are connected directly to covering element 4 at the position of surface 4a₂ of covering element 4.

The figures show that superstructure 2 is manufactured according to the method and by means of the mould according to the invention. Hull 1 could also be manufactured in accordance with the method according to the invention and could thus be provided with for instance a covering element 4 on the surface of hull 1 located on the outside during use, for instance in the form of a bumper.

Covering elements 4 are shown in the figures as sheet-like elements. The covering elements can for instance also be plank or strip-like, or even be round elements distributed over the surface to be covered.

The shown covering elements 4 are preferably formed from a plastic composite. Particularly favourable covering elements of plastic composite are commercially available under the brand name Esthec^{®}. The covering elements can for instance also be of wood.

## Claims

1. Method for manufacturing a part (1, 2) of a vessel, comprising of
- arranging a plastic composite in a number of layers in a mould (5) with a surface (7) forming a reverse form of the part of the vessel to be manufactured; and
- arranging covering elements (4) in the mould (5) before the step of arranging the layers of the plastic composite so that the layers of the plastic composite are connected to the covering elements.

2. Method as claimed in claim 1, wherein the part of the vessel to be manufactured is either the hull (1) or the superstructure (2).

3. Method as claimed in claim 1 or 2, wherein
- recesses (13) are arranged in the surface of the mould (5) for the purpose of arranging the covering elements (4) therein, wherein the recesses preferably take the form of the covering elements to be arranged.

4. Method as claimed in any of the claims 1 to 3, comprising of
- applying a gel coat (9) to at least a part of the surface (7a) of the mould (5) that is free of the covering elements (4) and to at least a part of the surface (4a) of the covering elements remote from the mould, this before the step of arranging the plastic composite and after the step of arranging the covering elements in the mould.

5. Method as claimed in claim 4, wherein
- the part of the surface (4a) of the covering elements (4) arranged in the mould (5) which is remote from the mould and to which the gel coat (9) is applied is the edge part (4a₁).

6. Method as claimed in any of the foregoing claims, also comprising of:
- generating an underpressure between the surface (4b) of the covering elements (4) facing toward the mould (5) and the surface (7b) of the mould facing toward the covering elements, this after the covering elements have been arranged in the mould.

7. Method as claimed in claim 6, wherein
- the part of the surface (7b) of the mould (5) on which the covering elements (4) are arranged comprises openings (15) through which air can be suctioned in order to generate the underpressure.

8. Method as claimed in any of the foregoing claims, wherein
- the plastic composite arranged in a number of layers is a fibre-reinforced plastic composite, preferably glass fibre-reinforced polyester.

9. Method as claimed in any of the foregoing claims, wherein
- the covering elements (4) are anti-slip elements.

10. Method as claimed in any of the foregoing claims, wherein
- the covering elements (4) are formed from a plastic composite.

11. Method as claimed in any of the foregoing claims, wherein
- the covering elements (4) are sheet-like.

12. Method as claimed in claim 1, wherein the mould (5) comprises:
- a surface (7) which forms a reverse form of the part (1, 2) of the vessel to be manufactured, preferably either the superstructure (2) or the hull (1),
wherein
- the surface (7) of the mould (5) comprises a positioning construction (13, 15) for positioning covering elements (4) in the mould (5).

13. Method as claimed in claim 12, wherein
- the positioning construction comprises recesses (13) for arranging covering elements (4) therein, wherein the recesses (13) preferably take the form of the covering elements (4) to be arranged.

14. Method as claims in claim 12 or 13, wherein
- the positioning construction comprises openings (15) through which air can be suctioned in order to generate an underpressure between the surface (4b) of the covering elements (4) facing toward the mould (5) and the surface (7b) of the mould facing toward the covering elements (4).

15. Part (1, 2) of a vessel manufactured according to the method as claimed in any of the claims 1 to 14.

16. Vessel comprising a number of parts (1, 2) which is manufactured according to the method as claimed in any of the claims 1 to 14.

## Patentansprüche

1. Verfahren zur Herstellung eines Teils (1,2) eines Schiffes, welches umfasst:
- Auftragen eines Verbundwerkstoffs aus Plastik in einer Vielzahl von Schichten in einem Formwerkzeug (5) mit einer Oberfläche (7), welche das Negativ des Teils des Schiffes, welches hergestellt werden soll, bildet; und
- Anordnen von Abdeckelementen (4) im Formwerkzeug (5) vor dem Schritt, die Schichten des Verbundwerkstoffs aus Plastik aufzutragen, so dass die Schichten des Verbundwerkstoffs aus Plastik mit den Abdeckelementen verbunden werden.

2. Verfahren gemäß Anspruch 1, wobei das herzustellende Teil des Schiffes entweder der Rumpf (1) oder der Aufbau (2) ist.

3. Verfahren gemäß Anspruch 1 oder 2, wobei
- Aussparungen (13) in der Oberfläche des Formwerkzeugs (5) angeordnet sind, um die Abdeckelemente (4) darin anzuordnen, wobei die Aussparungen vorzugsweise die Form der Abdeckelemente, welche angeordnet werden sollen, annehmen.

4. Verfahren gemäß einem der Ansprüche 1 bis 3, umfassend
- Auftragen einer Gelbeschichtung (9) auf mindestens einem Teil der Oberfläche (7a) des Formwerkzeugs (5), welcher frei von den Abdeckelementen (4) ist, und auf mindestens einem Teil der Oberfläche (4a) der Abdeckelemente, welche vom Formwerkzeug abgewandt sind, vor dem Schritt, den Verbundwerkstoff aus Plastik aufzutragen, und nach dem Schritt, die Abdeckelemente im Formwerkzeug anzuordnen.

5. Verfahren gemäß Anspruch 4, wobei
- der Teil der Oberfläche (4a) der im Formwerkzeug (5) angeordneten Abdeckelemente (4), welcher der Vertiefung abgewandt ist und auf welchem die Gelbeschichtung (9) aufgebracht wurde, der Randteil (4a₁) ist.

6. Verfahren gemäß einem der vorangehenden Ansprüche, welches außerdem umfasst:
- Erzeugen eines Unterdruckes zwischen der Oberfläche (4b) der Abdeckelemente (4), welche hin zum Formwerkzeug (5) zeigt, und der Oberfläche (7b) des Formwerkzeugs, welche zu den Abdeckelementen hin zeigt, nachdem die Abdeckelemente im Formwerkzeug angeordnet worden sind.

7. Verfahren gemäß Anspruch 6, wobei
- der Teil der Oberfläche (7b) des Formwerkzeugs (5), auf dem die Abdeckelemente (4) angeordnet sind, Öffnungen (15) umfasst, durch welche Luft abgesaugt werden kann, um den Unterdruck zu erzeugen.

8. Verfahren gemäß einem der vorhergehenden Ansprüche, wobei
- der Verbundwerkstoff aus Plastik, welcher in einer Vielzahl von Schichten aufgebracht ist, ein durch Fasern verstärkter Verbundwerkstoff aus Plastik ist, vorzugsweise durch Glasfasern verstärktes Polyester.

9. Verfahren gemäß einem der vorhergehenden Ansprüche, wobei
- die Abdeckelemente (4) Antirutschelemente sind.

10. Verfahren gemäß einem der vorhergehenden Ansprüche, wobei
- die Abdeckelemente (4) aus einem Verbundwerkstoff aus Plastik ausgebildet sind.

11. Verfahren gemäß einem der vorhergehenden Ansprüche, wobei
- die Abdeckelemente (4) plattenförmig sind.

12. Verfahren gemäß Anspruch 1, wobei das Formwerkzeug (5) umfasst:
- eine Oberfläche (7), die ein Negativ des Teils (1, 2) eines Schiffes, welches hergestellt werden soll, bildet, vorzugsweise entweder der Aufbau (2) oder der Rumpf (1),
wobei
- die Oberfläche (7) des Formwerkzeugs (5) eine Positionierungsvorrichtung (13, 15) umfasst, um Abdeckelemente (4) im Formwerkzeug (5) anzuordnen.

13. Verfahren gemäß Anspruch 12, wobei
- die Positionierungsvorrichtung Aussparungen (13) umfasst, um die Abdeckelemente (4) darin anzuordnen, wobei die Aussparungen (13) vorzugsweise die Form der Abdeckelemente (4), welche angeordnet werden sollen, annehmen.

14. Verfahren gemäß Anspruch 12 oder 13, wobei
- die Positionierungsvorrichtung Öffnungen (15) umfasst, durch die Luft abgesaugt werden kann, um einen Unterdruck zwischen der Oberfläche (4b) der Abdeckelemente (4), welche zum Formwerkzeug (5) zeigt, und der Oberfläche (7b) des Formwerkzeugs, welche zu den Abdeckelementen (4) hin zeigt, zu erzeugen.

15. Teil (1, 2) eines Schiffes, welches gemäß dem Verfahren gemäß einem der Ansprüche 1 bis 14 hergestellt wurde.

16. Schiff, welches eine Anzahl von Teilen (1, 2) umfasst, welche gemäß des Verfahrens gemäß einem der Ansprüche 1 bis 14 hergestellt wurden.

## Revendications

1. Procédé destiné à fabriquer une partie (1, 2) d'un bateau, comprenant les étapes :
- d'agencement d'un composite de matière plastique en un certain nombre de couches dans un moule (5) avec une surface (7) qui présente une forme inversée de la partie du bateau à fabriquer ; et
- d'agencement des éléments de couverture (4) dans le moule (5) avant l'étape d'agencement des couches du composite de matière plastique de telle sorte que les couches du composite de matière plastique soient reliées aux éléments de couverture.

2. Procédé selon la revendication 1, dans lequel la partie du bateau à fabriquer est la coque (1) ou la superstructure (2).

3. Procédé selon la revendication 1 ou 2, dans lequel :
- des renfoncements (13) sont agencés sur la surface du moule (5) de façon à agencer à l'intérieur les éléments de couverture (4), dans lequel les renfoncements prennent de préférence la forme des éléments de couverture à agencer.

4. Procédé selon l'une quelconque des revendications 1 à 3, consistant à :
- appliquer un enduit gélifié (9) sur au moins une partie de la surface (7a) du moule (5) qui ne présente aucun élément de couverture (4), et sur au moins une partie de la surface (4a) des éléments de couverture distants du moule, ceci avant l'agencement du composite de matière plastique et après l'agencement des éléments de couverture dans le moule.

5. Procédé selon la revendication 4, dans lequel :
- la partie de la surface (4a) des éléments de couverture (4) agencés dans le moule (5) qui est distante du moule et sur laquelle est appliqué l'enduit gélifié (9), est la partie de bord (4a₁).

6. Procédé selon l'une quelconque des revendications précédentes, consistant aussi à :
- générer une dépression entre la surface (4b) des éléments de couverture (4) qui fait face au moule (5), et la surface (7b) du moule qui fait face aux éléments de couverture, ceci une fois que les éléments de couverture aient été agencés dans le moule.

7. Procédé selon la revendication 6, dans lequel :
- la partie de la surface (7b) du moule (5) sur laquelle sont agencés les éléments de couverture (4), comprend des ouvertures (15) à travers lesquelles l'air peut être aspiré pour générer la dépression.

8. Procédé selon l'une quelconque des revendications précédentes, dans lequel :
- le composite de matière plastique agencé en un certain nombre de couches, est un composite de matière plastique renforcé de fibres, de préférence un polyester renforcé de fibres de verre.

9. Procédé selon l'une quelconque des revendications précédentes, dans lequel :
- les éléments de couverture (4) sont des éléments antidérapants.

10. Procédé selon l'une quelconque des revendications précédentes, dans lequel :
- les éléments de couverture (4) sont formés à partir d'un composite de matière plastique.

11. Procédé selon l'une quelconque des revendications précédentes, dans lequel :
- les éléments de couverture (4) sont similaires à une feuille.

12. Procédé selon la revendication 1, dans lequel le moule (5) comprend :
- une surface (7) qui présente une forme inversée de la partie (1, 2) du bateau à fabriquer, de préférence la superstructure (2) ou la coque (1) ;
dans lequel :
- la surface (7) du moule (5) comprend une construction de positionnement (13, 15) destinée à positionner les éléments de couverture (4) dans le moule (5).

13. Procédé selon la revendication 12, dans lequel :
- la construction de positionnement comprend des renfoncements (13) pour l'agencement à l'intérieur des éléments de couverture (4), dans lequel les renfoncements (13) prennent de préférence la forme des éléments de couverture (4) à agencer.

14. Procédé selon la revendication 12 ou 13, dans lequel :
- la construction de positionnement comprend des ouvertures (15) à travers lesquelles l'air peut être aspiré de façon à générer une dépression entre la surface (4b) des éléments de couverture (4) qui fait face au moule (5), et la surface (7b) du moule qui fait face aux éléments de couverture (4).

15. Partie (1, 2) d'un bateau fabriquée suivant le procédé selon l'une quelconque des revendications 1 à 14.

16. Bateau comprenant un certain nombre de parties (1, 2) qui sont fabriquées suivant le procédé selon l'une quelconque des revendications 1 à 14.
